# EUROPEAN PATENT APPLICATION

(11) **EP 4 454 930 A1**
(43) Date of publication of application: **30.10.2024**
(21) Application number: 22911359.2
(22) Date of filing: 22.12.2022
(51) Int. Cl.: B60L 50/62, B60L 50/64, B60L 58/12, B64C 39/02, H01M 4/38, H01M 4/90, H01M 10/44, H01M 12/06, H02J 7/00

(54) **POWER SUPPLY SYSTEM FOR ELECTRIC VEHICLE OR DRONE DEVICE**

(30) Priority: 22.12.2021 JP 2021208385
(71) Applicant: Azul Energy Inc., Sendai-shi, Miyagi 980-0811 (JP)
(72) Inventor: ITO Koju, Sendai-shi, Miyagi 980-0811 (JP)
(74) Representative: Carpmaels & Ransford LLP
(86) International application number: PCT/JP2022/047409
(87) International publication number: WO 2023/120657

(57) **Abstract**

A small and lightweight power supply system included in an electric vehicle is provided. A power supply system for an electric vehicle includes a battery system for supplying power to a drive unit of the electric vehicle and a range extender unit for supplying power to the battery system when a charge capacity of the battery system decreases, in which a power supply source of the range extender unit is a metal-air battery.

## Description

### [Technical Field]

The present invention relates to a power supply system for an electric vehicle or a drone device.

### [Background Art]

The power supply system for an electric vehicle or a drone device consists of a battery system for supplying power, which is made up of a plurality of lithium-ion batteries, nickel-metal hydride battery packs, or supercapacitors, and a charging and energy recovery system. For long-distance movement and flight, the battery capacity of the battery system needs to be increased. This requires an installation of many heavy lithium-ion batteries, which causes a problem of poor fuel efficiency due to the increased battery weight.

### [Citation List]

### [Patent Document]

[Patent Document 1]
Published Japanese Translation No. 2019-532605 of the PCT International Publication

### [Summary of Invention]

### [Technical Problem]

As an approach to this problem, in the past, in addition to secondary batteries such as lithium-ion batteries, provision of a range extender that includes a fuel oil generating unit (a so-called engine) that uses gasoline or the like, and a generating unit such as a hydrogen fuel cell, has been proposed (Patent Document 1). However, since the fuel oil generating unit and the generating unit such as a hydrogen fuel cell have large and complex mechanisms, there were problems such as increases in the weight and size of the power supply system, and an increase in the frequency of breakdowns.

The present invention has been made in consideration of the circumstances described above, and an object thereof is to provide a lightweight and small power supply system for electric vehicles or drone devices.

### [Solution to Problem]

To solve the problems described above, one aspect of the present invention is a power supply system for an electric vehicle that includes a battery system for supplying power to a drive unit of the electric vehicle, and a range extender unit for supplying power to the battery system when a charge capacity of the battery system decreases, in which a power supply source of the range extender unit is a metal-air battery.

In addition, another aspect of the present invention is a power supply system for a drone device that includes a battery system for supplying power to a drive unit of the drone device, and a range extender unit for supplying power to the battery system when a charge capacity of the battery system decreases, in which a power supply source of the range extender unit is a metal-air battery.

### [Advantageous Effects of Invention]

According to at least one of the aspects described above, since the range extender unit 2 supplies power to the battery system 3 in an auxiliary manner, the battery system 3 itself does not need to have a capacity for long-distance movement, and the like. This makes it possible to minimize the capacity and weight of the lithium-ion batteries, nickel-metal hydride batteries, and solid-state batteries used in the battery system 3, which are essential for driving the motor. As a result, it is possible to make the entire power supply system smaller, lighter, and simpler.

### [Brief Description of Drawings]

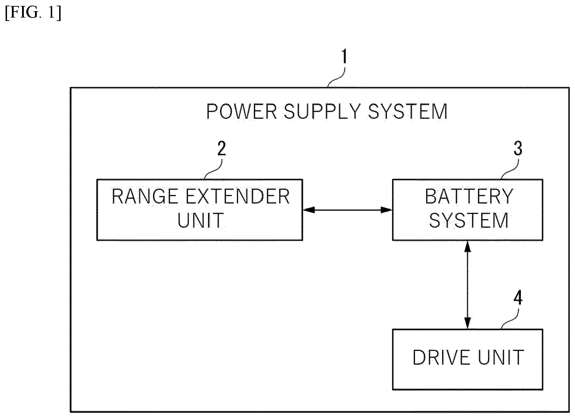

FIG. 1 is a diagram which shows an overall structure of a device including a power supply system for an electric vehicle according to a first embodiment.

### [Description of Embodiments]

### <First embodiment>

Hereinafter, a power supply system 1 according to a first embodiment will be described with reference to FIG. 1. FIG. 1 is a diagram which shows an overall configuration of the power supply system 1 for an electric vehicle according to the first embodiment.

The power supply system 1 includes a range extender unit 2, a battery system 3, and a drive unit 4 of an electric vehicle. The battery system 3 supplies power to the drive unit 4. The drive unit 4 is a device that operates using power installed in the electric vehicle, such as a motor. The range extender unit 2 generates a direct current and supplies power to the battery system 3. For example, when a charge capacity of the battery system 3 decreases due to long-distance movement of the electric vehicle, the range extender unit 2 supplies power to the battery system 3. In an emergency, such as when power is not supplied from the battery system 3 to the drive unit 4, the range extender unit 2 may supply power to the drive unit 4. The range extender unit 2 includes a metal-air battery as a power supply source. The metal-air battery is of a replaceable type.

The metal-air battery is preferably a stack of a plurality of metal-air battery cells in series or parallel depending on a voltage, an output, and a capacity required as a power supply source.

The range extender unit 2 may be further configured to supply power to the battery system 3 when a predetermined condition is satisfied by a decrease in charge capacity of the battery system 3. For example, the predetermined condition may be a case where the charge capacity is equal to or less than a first threshold value, a case where a rate of decrease in the charge capacity is equal to or less than a second threshold value, or a case where the charge capacity is equal to or less than the first threshold value and the rate of decrease in the charge capacity is equal to or less than the second threshold value. Note that the predetermined condition is not limited to these conditions.

A storage unit of the metal-air battery of the range extender unit 2 may be provided in a vehicle near the passenger seat, in the trunk, or in the hood so that a user can replace the metal-air battery. When the storage unit is provided in the vehicle, the user can replace the metal-air battery from inside the vehicle. When the capacity of the metal-air battery decreases, the metal-air battery is replaced. Replacement of the metal-air battery may also be performed mechanically and automatically.

The battery system 3 may include one or more battery packs and a battery management system (BMS) corresponding to each battery pack. Examples of a battery type used in the battery system 3 include lithium-ion batteries, nickel-metal hydride batteries, solid-state batteries, and the like. The BMS controls connection and disconnection of a battery pack to the drive unit 4. The power supply system 1 may also include a controller for controlling a power supply mode of the range extender unit 2 and for controlling a connection state between the range extender unit 2 and the battery system 3, a connection state between the range extender unit 2 and the drive unit 4, and/or a connection state between the battery system 3 and the drive unit 4.

A metal-air battery is a battery that uses oxygen as an active material of a positive electrode (air electrode) and a metal as an active material of a negative electrode. For example, the negative electrode contains at least one of zinc, magnesium, aluminum, iron, lithium, and calcium. The air electrode contains a metal complex or an adduct thereof.

The metal complex is represented by a following formula (1) or formula (2): 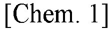 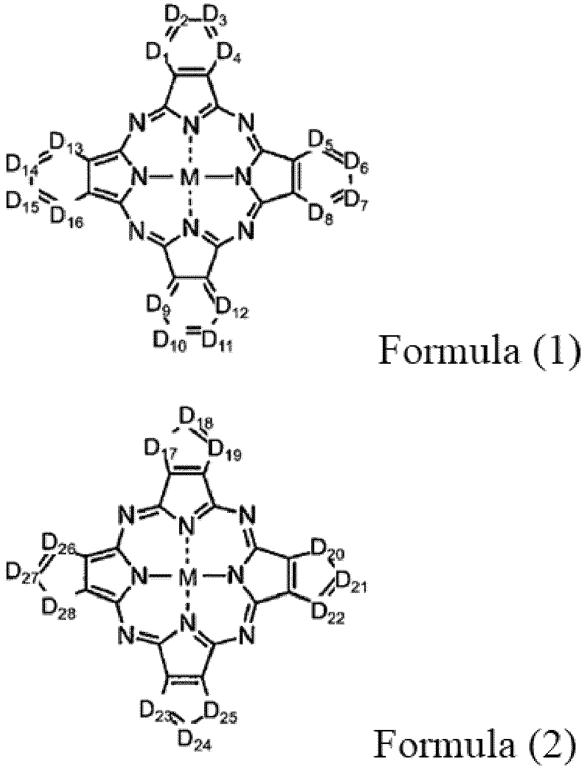 M is a metal atom. D₁ to D₂₈ are each independently a nitrogen atom, a sulfur atom, or a carbon atom. When D₁ to D₂₈ are carbon atoms, each of the carbon atoms may be independently bonded to a hydrogen atom, a halogen atom, an alkyl group, a cycloalkyl group, an alkenyl group, an alkynyl group, an aryl group, an alkyl sulfonyl group, an alkoxy group, or an alkylthio group.

A bond between the nitrogen atom and M means a coordination of the nitrogen atom to M. M may further be bonded to a halogen atom, a hydroxyl group, or a hydrocarbon group having 1 to 8 carbon atoms as a ligand. In addition, an anionic counter-ion may be present to give electrical neutrality. Furthermore, it may be present as an adduct to which an electrically neutral molecule is added.

A valence of M is not particularly limited. To make the metal complex or the adduct thereof electrically neutral, a halogen atom, a hydroxyl group, or an alkoxy group having 1 to 8 carbon atoms (an alkyloxy group) may be bonded as a ligand (for example, an axial ligand), and an anionic counter-ion may be present. Examples of the anionic counter-ion include halide ions, hydroxide ions, nitrate ions, and sulfate ions. A structure of the alkyl group in the alkoxy group having 1 to 8 carbon atoms (an alkyloxy group) may be linear, branched, or cyclic.

Examples of M include a scandium atom, a titanium atom, a vanadium atom, a chromium atom, a manganese atom, an iron atom, a cobalt atom, a nickel atom, a copper atom, a zinc atom, a yttrium atom, a zirconium atom, a niobium atom, a ruthenium atom, a rhodium atom, a palladium atom, a lanthanum atom, a cerium atom, a praseodymium atom, a neodymium atom, a promethium atom, a samarium atom, a europium atom, a gadolinium atom, a terbium atom, a dysprosium atom, a holmium atom, an erbium atom, a thulium atom, a ytterbium atom, a lutetium atom, an actinium atom, a thorium atom, a protactinium atom, a uranium atom, a neptunium atom, a plutonium atom, an americium atom, a curium atom, a berkelium atom, a californium atom, an einsteinium atom, a fermium atom, a mendelevium atom, a nobelium atom, and a lawrencium atom. Among these, M is preferably a manganese atom, an iron atom, a cobalt atom, a nickel atom, a copper atom, or a zinc atom, and more preferably an iron atom, a cobalt atom, a nickel atom, or a copper atom.

In the present invention, examples of the halogen atom include fluorine, chlorine, bromine, and iodine.

In the present invention, an alkyl group represents a linear or branched monovalent hydrocarbon group. The number of carbon atoms in the alkyl group is preferably 1 to 20, more preferably 1 to 12, and even more preferably 1 to 6. Examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a sec-pentyl group, a tert-pentyl group, and an n-hexyl group.

In the present invention, a cycloalkyl group represents a cyclic monovalent hydrocarbon group. The number of carbon atoms in the cycloalkyl group is preferably 3 to 20, more preferably 3 to 12, and even more preferably 3 to 6. Examples of the cycloalkyl group include a cyclopropyl group, a cyclobutyl group, a cyclopentyl group, a cyclohexyl group, a 1-methylcyclopropyl group, a 2-methylcyclopropyl group, and a 2,2-dimethylcyclopropyl group.

In the present invention, an alkenyl group represents a linear or branched monovalent hydrocarbon group containing a double bond. The number of carbon atoms in the alkenyl group is preferably 2 to 20, more preferably 2 to 12, and even more preferably 2 to 6. Examples of the alkenyl group include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, and a 5-hexenyl group.

In the present invention, the alkynyl group represents a linear or branched monovalent hydrocarbon group containing a triple bond. The number of carbon atoms in the alkynyl group is preferably 2 to 20, more preferably 2 to 12, and even more preferably 2 to 6. Examples of the alkynyl group include an ethynyl group, a 1-propynyl group, a 2-propynyl group, a (1-butynyl group) 1-butyn-1-yl group, a (2-butynyl group) 2-butyn-1-yl group, a (3-butynyl group) 3-butyn-1-yl group, a (1-methyl-2-propynyl group) 1-methyl-2-propyn-1-yl group, a (2-methyl-3-butynyl group) 2-methyl-3-butyn-2-yl group, a (1-pentynyl group) 1-pentyn-1-yl group, a (2-pentynyl group) 2-pentyn-1-yl group, a (3-pentynyl group) 3-pentyn-2-yl group, a (4-pentynyl group) 4-pentyn-1-yl group, a 1-methyl-2-butynyl group (1-methyl-2-butyn-1-yl group), a (2-methyl-3-pentynyl group) 2-methyl-3-pentyn-1-yl group, a (1-hexynyl group) 1-hexyn-1-yl group, and a (1,1-dimethyl-2-butynyl group) 1,1-dimethyl-2-butyn-1-yl group.

In the present invention, the aryl group represents a monovalent aromatic hydrocarbon group. The number of carbon atoms in the aryl group is preferably 6 to 40, and more preferably 6 to 30. Examples of the aryl group include a phenyl group, a biphenyl group, a terphenyl group, a naphthyl group, a fluorenyl group, a benzofluorenyl group, a dibenzofluorenyl group, a phenanthryl group, an anthracenyl group, a benzophenanthryl group, a benzoanthracenyl group, a chrysenyl group, a pyrenyl group, a fluoranthenyl group, a triphenylenyl group, a benzofluoranthenyl group, a dibenzoanthracenyl group, a perylenyl group, and a helicenyl group.

In the present invention, the alkyl sulfonyl group represents a monovalent group in which an alkyl group is bonded to a sulfonyl group. The alkyl group in the alkyl sulfonyl group can be a group described above as the "alkyl group." The number of carbon atoms in the alkyl sulfonyl group is preferably 1 to 20, more preferably 1 to 12, and even more preferably 1 to 6. Examples include a methyl sulfonyl group, an ethyl sulfonyl group, a normal propyl sulfonyl group, an isopropyl sulfonyl group, an n-butyl sulfonyl group, a sec-butyl sulfonyl group, a tert-butyl sulfonyl group, an n-pentyl sulfonyl group, an isopentyl sulfonyl group, a tert-pentyl sulfonyl group, a neopentyl sulfonyl group, a 2,3-dimethylpropyl sulfonyl group, a 1-ethylpropyl sulfonyl group, a 1-methylbutyl sulfonyl group, an n-hexyl sulfonyl group, an isohexyl sulfonyl group, and a 1,1,2-trimethylpropyl sulfonyl group.

In the present invention, the alkoxy group represents a monovalent group in which a hydrocarbon group is bonded via an ether bond. The number of carbon atoms in the alkoxy group is preferably 1 to 20, more preferably 1 to 12, and even more preferably 1 to 6. Examples of the alkoxy group include a methoxy group, an ethoxy group, an n-propoxy group, an n-butoxy group, an n-pentyloxy group, an n-hexyloxy group, an isopropoxy group, an isobutoxy group, a sec-butoxy group, a tert-butoxy group, and an isohexyloxy group.

In the present invention, the alkylthio group represents a group in which an oxygen atom in the ether bond of the alkoxy group is replaced with a sulfur atom. The number of carbon atoms in the alkylthio group is preferably 1 to 20, more preferably 1 to 16, and even more preferably 1 to 12. Examples of the alkylthio group include a methylthio group, an ethylthio group, an n-propylthio group, an n-butylthio group, an n-pentylthio group, an n-hexylthio group, and an isopropylthio group.

The alkyl group, cycloalkyl group, alkenyl group, alkynyl group, aryl group, alkyl sulfonyl group, alkoxy group, and alkylthio group may be unsubstituted substituents, but each may be substituted by one or more substituents such as halogen, an alkyl group, an alkenyl group, an alkynyl group, an aryl group, an alkoxy group, an alkylthio group, a cyano group, a carbonyl group, a carboxyl group, an amino group, a nitro group, a silyl group, and a sulfo group.

D₁ to D₁₆ are preferably nitrogen atoms or carbon atoms, and D₁₇ to D₂₈ are preferably sulfur atoms or carbon atoms. The number of nitrogen atoms in D₁ to D₁₆ is preferably 2 to 12, more preferably 4 to 8. The number of sulfur atoms in D₁₇ to D₂₈ is preferably 2 to 10, more preferably 4 to 8.

Preferably, the metal complex or the adduct thereof is a compound represented by the following formula.

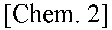

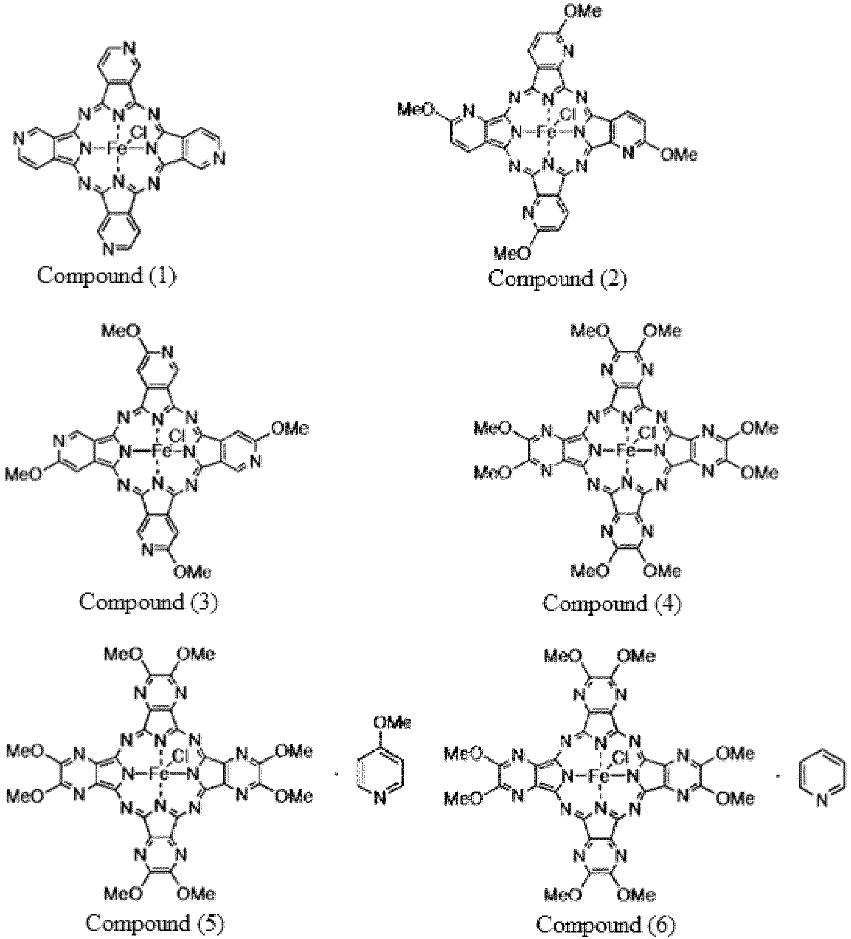

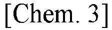

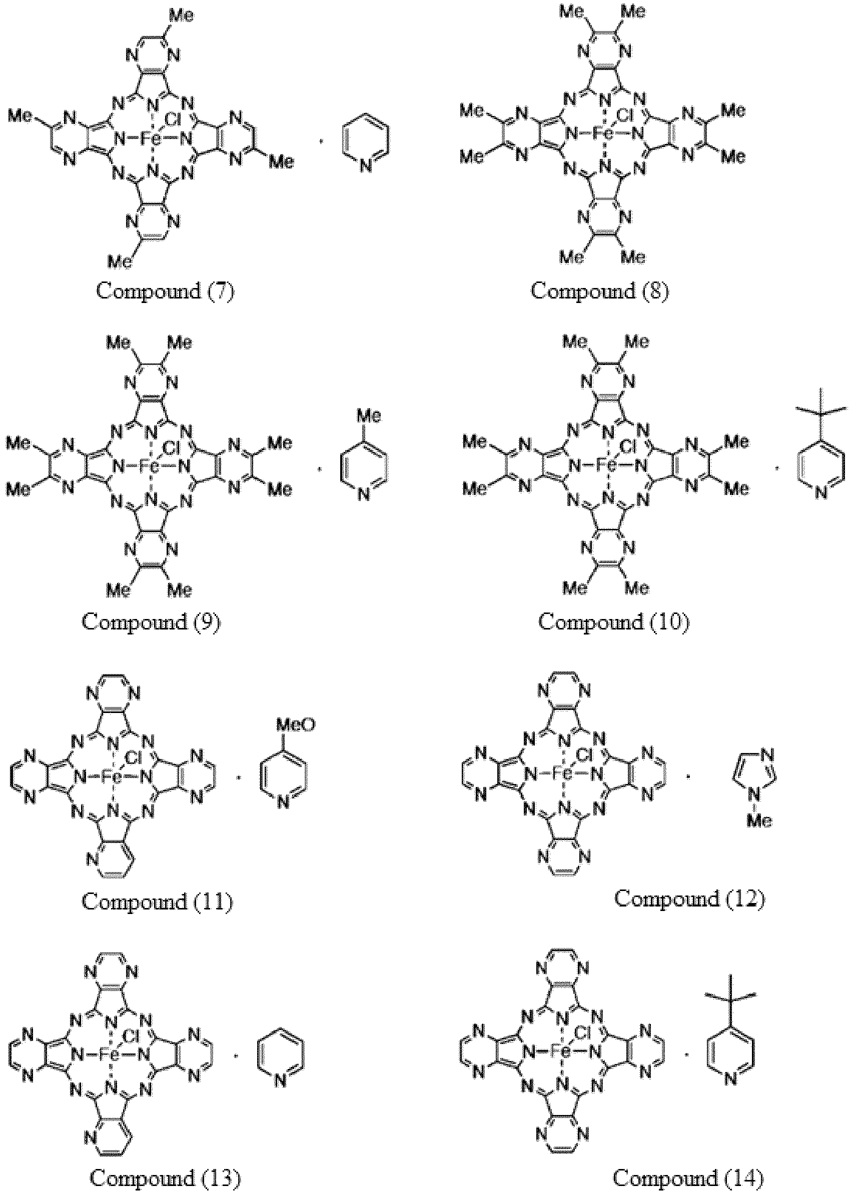

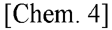

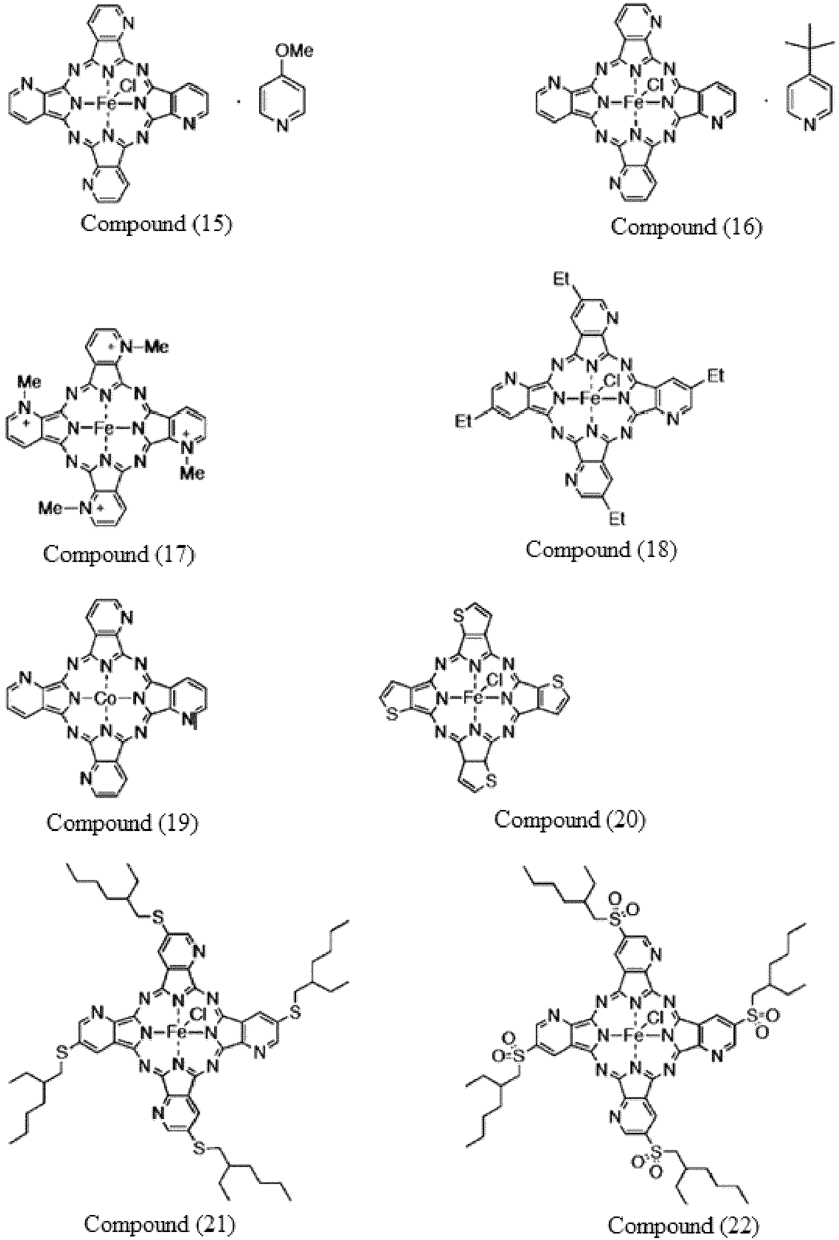

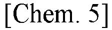

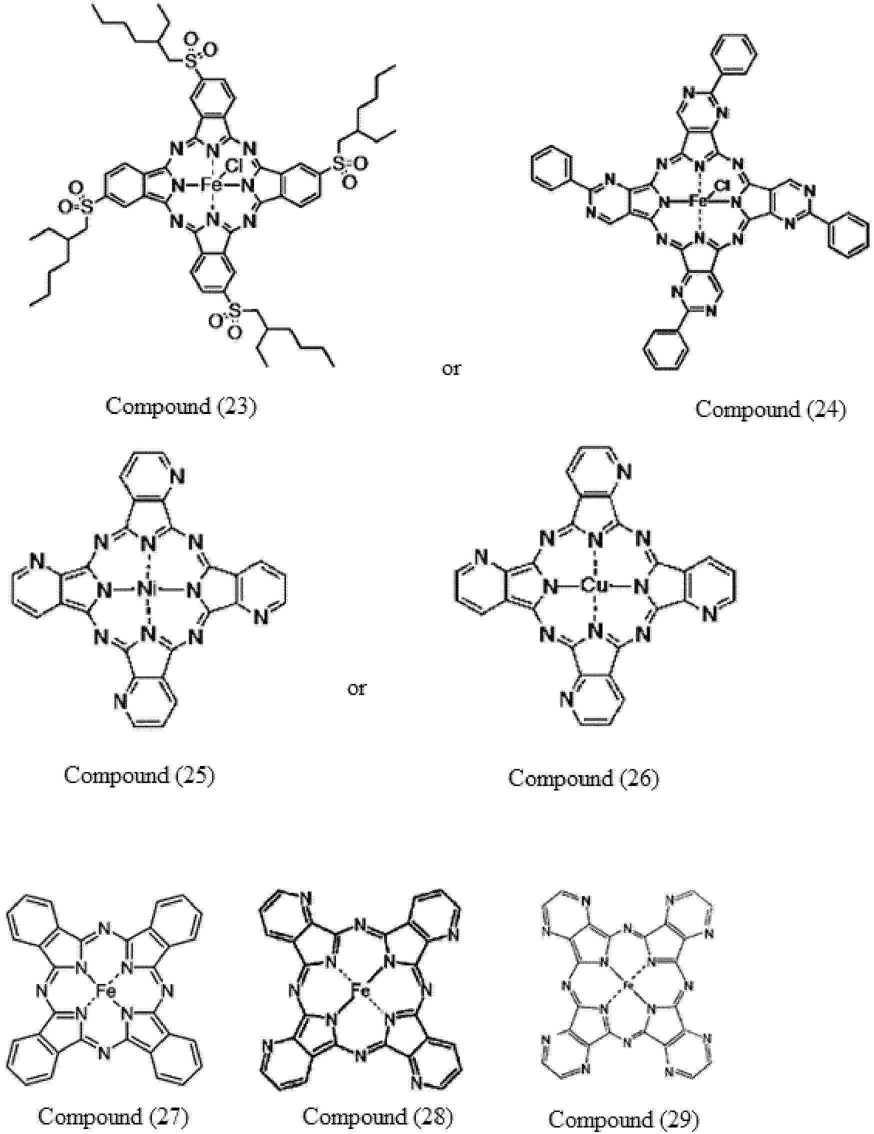

A method for manufacturing the metal complex or the adduct thereof is not particularly limited, but an example thereof is a method of heating a dicyano compound such as pyridine-2,3-dicarbonitrile and a metal atom in an alcohol solvent in a presence of a basic substance. Examples of the basic substance include inorganic bases such as potassium carbonate, sodium carbonate, calcium carbonate, sodium hydrogencarbonate, and sodium acetate, and organic bases such as triethylamine, tributylamine, and diazabicycloundecene.

### (Action and effect)

The power supply system 1 according to the first embodiment includes the battery system 3 for supplying power to the drive unit 4 of an electric vehicle, and the range extender unit 2 for supplying power to the battery system 3 when the charge capacity of the battery system 3 decreases. A power source of the range extender unit 2 is a metal-air battery. A metal-air battery has an energy density three to ten times higher than that of a secondary battery such as a lithium-ion battery. In addition, since the range extender unit 2, which uses such a metal-air battery as a power supply source, supplies power to the battery system 3 in an auxiliary manner, the battery system 3 itself does not need to have a capacity for long-distance movement, and the like. For this reason, it is possible to minimize the capacity and weight of lithium-ion batteries, nickel-metal hydride batteries, and all-solid-state batteries used in the battery system 3, which are essential for driving the motor. As a result, it is possible to make an entire power supply system smaller, lighter, and simpler.

### <Second embodiment>

In a second embodiment, a power supply system having the same functions and configuration as the power supply system according to the first embodiment is provided in a drone device.

### (Action and effect)

That is, the power supply system 1 according to the second embodiment includes the battery system 3 for supplying power to the drive unit 4 of a drone device, and the range extender unit 2 for supplying power to the battery system 3 when the charge capacity of the battery system 3 decreases, and the power supply source of the range extender unit 2 is a metal-air battery. A metal-air battery has an energy density three to ten times higher than that of a secondary battery such as a lithium-ion battery.

In addition, since the range extender unit 2, which uses such a metal-air battery as a power supply source, supplies power to the battery system 3 in an auxiliary manner, the battery system 3 itself does not need to have a capacity for long-distance movement, and the like. For this reason, it is possible to minimize the capacity and weight of the lithium-ion batteries, nickel-metal hydride batteries, and all-solid-state batteries used in the battery system 3, which are essential for driving the motor. As a result, it is possible to make the entire power supply system smaller, lighter, and simpler.

### [Example 1]

As an example of a power supply system for an electric vehicle and a drone, a comparison of voltage, capacity, and power consumption when batteries of the range extender unit are configured differently will be described. (Table 1)

In Example 1, zinc was used as a negative electrode of the metal-air battery. As a catalyst for an air electrode, a laminate cell was used, which uses a carbon electrode containing a complex in which a metal complex of a compound 28 was supported on carbon black.

### [Example 2]

In Example 2, a compound carrying manganese dioxide was used as the catalyst for an air electrode instead of the metal complex of the compound 28 in the laminate cell of Example 1.

As a comparative example, Comparative Example 1 was set in which AA alkaline batteries were used in the range extender unit.

Each battery module of Examples 1, 2, and Comparative Example 1 is designed so that a battery module voltage is equivalent to that of a typical drone battery of 7.38 V by connecting five batteries in series. In addition, laminate cells of Example 1 and Example 2 were prepared so that weights of the battery modules of Example 1, Example 2, and Comparative Example 1 were the same as each other.

Compared to an alkaline battery of Comparative Example 1, in the zinc-air battery modules of Examples 1 and 2, the amount of electricity per unit weight was significantly increased by about 5 times or more, and it was confirmed that the energy density was excellent. In addition, when Example 1 and Example 2 are compared, it was confirmed that the voltage was improved in the zinc-air battery by changing the air electrode catalyst from manganese dioxide to the metal complex shown in the compound 28.

When maximum outputs are compared, it was found that Example 2 had a maximum output of 10 W/module, while Example 1 had a maximum output of 25 W/module, which was about 2.5 times higher, and it was confirmed that the metal complex containing the compound 28 was superior as an air electrode catalyst.

**[Table 1]**

| | Example 1 | Example 2 | Comparative example 1 |
|---|---|---|---|
| Battery type | Zinc-air battery | Zinc-air battery | AA alkaline battery |
| Air electrode catalyst | Metal complex of compound 28 | Manganese dioxide | |
| Voltage [V] | 7.40 | 7.00 | 7.50 |
| Capacity [mAh] | 7,800 | 7,800 | 1,500 |
| Amount of electricity [Wh] | 58 | 55 | 11 |
| Weight [g] | 120 | 120 | 120 |

Although the embodiments 1 and 2 described above are about an electric vehicle and a drone device, the present invention may be applied to other electric mobility devices for which it is beneficial to have a range extender.

Specifically, the present invention may be applied to land mobility devices such as electric bikes (two-wheeled and three-wheeled) and e-scooters (electric kickboards), air mobility devices such as aircraft and electric vertical take-off and landing aircraft (eVTOLs, flying cars, and the like), or water or underwater mobility devices such as electric ships, submarines, and underwater drones.

As described above, several embodiments of the present invention have been described, but all of these embodiments are presented as examples and are not intended to limit the scope of the invention. These embodiments can be implemented in various other forms, and various omissions, substitutions, and modifications can be made within a range not departing from the gist of the invention. These embodiments and their modifications are included in the scope of the invention and its equivalents as described in the claims as well as in the scope and gist of the invention.

### [Reference Signs List]

1 Power supply system
2 Range extender unit
3 Battery system
4 Drive unit

## Claims

1. A power supply system for an electric mobility device comprising:
a battery system for supplying power to a drive unit of the electric mobility device; and
a range extender unit for supplying power to the battery system when a charge capacity of the battery system decreases,
wherein a power supply source of the range extender unit is a metal-air battery.

2. A power supply system for an electric vehicle comprising:
a battery system for supplying power to a drive unit of the electric vehicle; and
a range extender unit for supplying power to the battery system when a charge capacity of the battery system decreases,
wherein a power supply source of the range extender unit is a metal-air battery.

3. The power supply system for an electric vehicle according to claim 2,
wherein the range extender unit is further configured to supply power to the battery system when a predetermined condition is satisfied by a decrease in charge capacity of the battery system, and
the predetermined condition is a case where the charge capacity is equal to or less than a first threshold value, a case where a rate of decrease of the charge capacity is equal to or less than a second threshold value, or a case where the charge capacity is equal to or less than the first threshold value and the rate of decrease of the charge capacity is equal to or less than the second threshold value.

4. The power supply system for an electric vehicle according to claim 2 or 3,
wherein a negative electrode of the metal-air battery contains at least one of zinc, magnesium, aluminum, iron, lithium, and calcium, and
an air electrode of the metal-air battery contains a metal complex or an adduct thereof.

5. The power supply system for an electric vehicle according to claim 4,
wherein the metal complex is represented by a following formula (1) or formula (2), 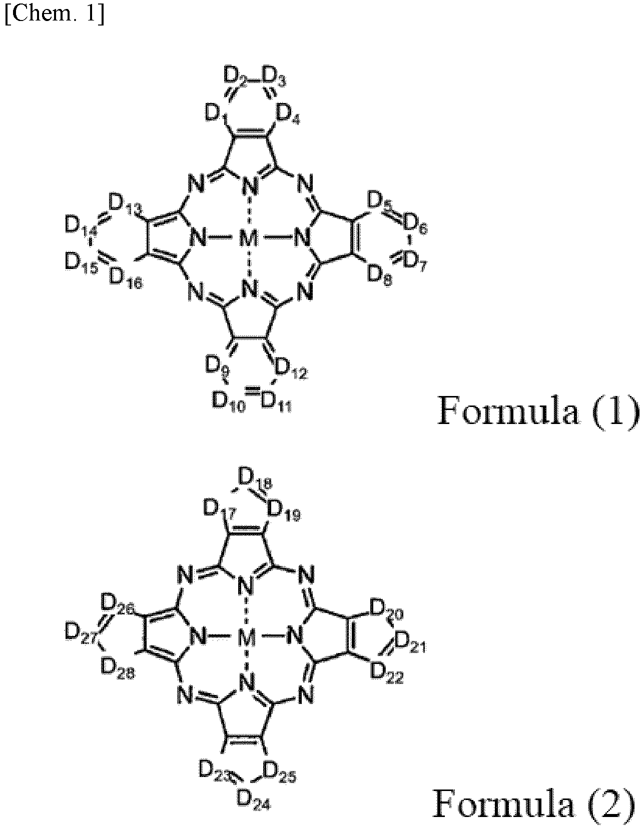
M is a metal atom,
D₁ to D₂₈ are each independently a nitrogen atom, a sulfur atom, or a carbon atom, and
when D₁ to D₂₈ are carbon atoms, the carbon atoms are likely to be each independently bonded to a hydrogen atom, a halogen atom, an alkyl group, a cycloalkyl group, an alkenyl group, an alkynyl group, an aryl group, an alkyl sulfonyl group, an alkoxy group, or an alkylthio group.

6. A power supply system for a drone device comprising:
a battery system for supplying power to a drive unit of the drone device; and
a range extender unit for supplying power to the battery system when a charge capacity of the battery system decreases,
wherein a power supply source of the range extender unit is a metal-air battery.

7. The power supply system for a drone device according to claim 6,
wherein the range extender unit is further configured to supply power to the battery system when a predetermined condition is satisfied by a decrease in charge capacity of the battery system, and
the predetermined condition is a case where the charge capacity is equal to or less than a first threshold value, a case where a rate of decrease of the charge capacity is equal to or less than a second threshold value, or a case where the charge capacity is equal to or less than the first threshold value and the rate of decrease of the charge capacity is equal to or less than the second threshold value.

8. The power supply system for a drone device according to claim 6 or 7,
wherein a negative electrode of the metal-air battery contains at least one of zinc, magnesium, aluminum, iron, lithium, and calcium, and
an air electrode of the metal-air battery contains a metal complex or an adduct thereof.

9. The power supply system for a drone device according to claim 8,
wherein the metal complex is represented by a following formula (1) or formula (2), 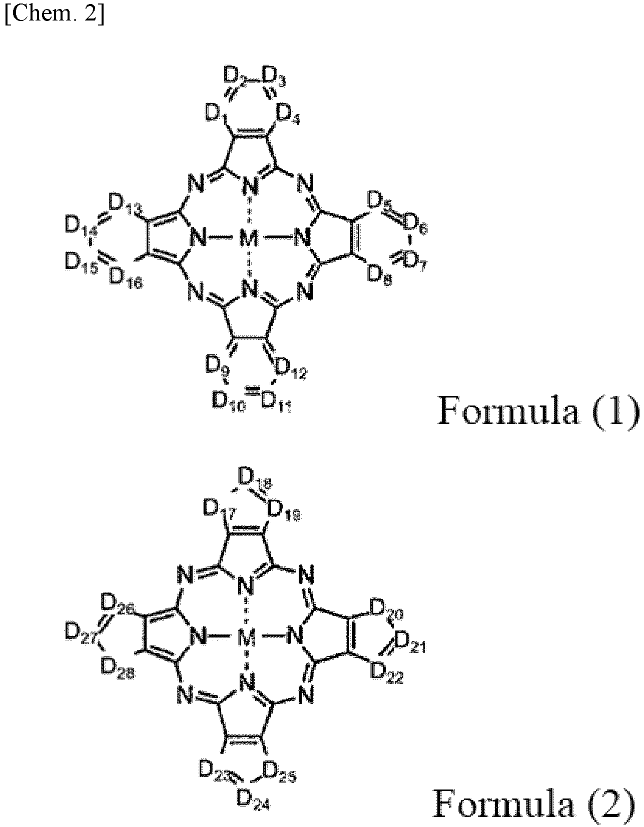
M is a metal atom,
D₁ to D₂₈ are each independently a nitrogen atom, a sulfur atom, or a carbon atom,
when D₁ to D₂₈ are carbon atoms, the carbon atoms are likely to be each independently bonded to a hydrogen atom, a halogen atom, an alkyl group, a cycloalkyl group, an alkenyl group, an alkynyl group, an aryl group, an alkyl sulfonyl group, an alkoxy group, or an alkylthio group.
